# EUROPEAN PATENT APPLICATION

(11) **EP 1 280 374 A1**
(43) Date of publication of application: **29.01.2003**
(21) Application number: 01440240.8
(22) Date of filing: 27.07.2001
(51) Int. Cl.: H04Q 11/04

(54) **Network element with redundant switching matrix**

(71) Applicant: ALCATEL, 75008 Paris (FR)
(72) Inventor: Heuer, Volkmar, 71254 Ditzingen (DE)
(74) Representative: Urlichs, Stefan, Dipl.-Phys.

(57) **Abstract**

A network element (DCX) of a digital transmission network has a first switching matrix (12), a second redundant switching matrix (13), a plurality of I/O ports (14, 15), each being controllably connectable to either of the two switching matrices, and a control system (18). The I/O ports (14, 15) receive and transmit transmission signals carrying either high priority traffic (10) or low priority traffic (11). In normal operation, the control system (18) controls the I/O ports (14, 15) to route received transmission signals carrying high priority traffic (10) to the first switching matrix (12) and transmission signals carrying low priority traffic (11) to the second switching matrix (13). In the case of a failure of the first switching matrix (12), the control system (18) controls the I/O ports (14, 15) to re-route transmission signals carrying high priority traffic (10) to the second switching matrix (13) while transmission signals carrying low priority traffic (11) may be dropped.

## Description

### Field of the Invention

The present invention relates to a network element with redundant switching matrix for a digital transmission network. More particularly, the invention relates to protection switching and to the control of the redundant matrix.

### Background of the invention

Digital transmission networks such as for example an SDH (Synchronous Digital Hierarchy) network, a SONET (Synchronous Optical Network) or OTN (Optical Transport Network) serve to transmit high amount of digital information like voice and data signals and consist of physically interconnected network elements. Such network elements are for example digital or optical cross-connects, add/drop multiplexers and terminal multiplexers and those are interconnected by optical fibers called lines.

Typically, useful information signals to be transmitted are mapped into multiplex units and multiplexed to higher bitrate signals according to a predefined multiplex hierarchy. According to the multiplex hierarchy of SDH for example, useful information signals are mapped in so called virtual containers VC-N (N=11, 12, 2, 3, 4, 4-4c, 4-16c, 4-64c, 4-256c) and multiplexed into a transmission frame called synchronous transport module STM-N (N=1,4, 16, 64, 256). The basic principles of SDH are defined in ITU-T G.707 (1996) which is incorporated by reference herein. A virtual container VC-N corresponds to a path while a synchronous transport module STM-N corresponds to a section in the network.

A very important aspect of digital transmission networks is availability and survivability of the network service even under failure conditions. SDH for example provides a number of standardized mechanisms to implement protection such as line protection and path protection. Protection mechanisms in SDH include linear 1:n, 1:1 or 1+1 MSP (Multiplex Section Protection), SNCP (Sub-Network Connection Protection) and MS-SPRing (Multiplex Section Shared Protection Ring) with either two (2F) or four fibers (4F). An overview over such protection mechanisms can be found in the article of J. Baudron et al, "Availability and Survivability of SDH Networks", Alcatel Electrical Communication 4^{th} Quarter 1993, pages 339-348, which is incorporated by reference herein.

The principle of protection switching is that redundant transmission resources are provided over which the protected traffic is re-routed in the case of a failure. For example the 1:n MSP provides one protection line to protect n working lines. If one of the working lines fails, the corresponding traffic is switched over to the protection line which thereby becomes a new active line.

Furthermore, most network elements provide hardware redundancy, e.g., 1:n protection on I/O ports and 1+1 protection on certain key subsystems such as matrices, power supply and clock generator. A typical network element like a digital cross-connect has a central switching matrix connected to various I/O ports. The matrix serves to cross-connect received transmission signals or fractions thereof (multiplex units) from any to any I/O port. The I/O ports are equipped with 1 :n protection, i.e., the cross-connect has n working I/O ports and one protection I/O port, while the switching matrix is provided twice, i.e. one working matrix and one protection matrix. A control system (which may also be 1+1 protected) controls the operation and configuration of the two switching matrices and causes switch-over from the active to the protection matrix in the case of a failure.

Now, it is possible to use the redundant transmission line capacity in the network for low-priority traffic, so called extra traffic, in order to increase the resource usage. In the case of a failure, extra traffic is immediately discarded and the protected traffic is re-routed over the protection line. Introduction of extra traffic encounters the problem that the switching matrices of network elements like digital cross-connects have to provide enough switching capacity to handle the normal traffic and the extra traffic.

### Summary of the Invention

It is therefore an object of the present invention to provide a network element which is able to support extra traffic in an efficient manner. Another object of the present invention is to provide a method of switching protected traffic and extra traffic in a digital transmission network.

These and other objects that appear below are achieved by a network element having a first switching matrix, a second redundant switching matrix, a plurality of I/O ports, each being controllably connectable to either of the two switching matrices, and a control system. The I/O ports receive and transmit transmission signals carrying either high priority traffic or low priority traffic. In normal operation, the control system controls the I/O ports to route received transmission signals carrying high priority traffic to the first switching matrix and transmission signals carrying low priority traffic to the second switching matrix. In the case of a failure of the first switching matrix, the control system controls the I/O ports to re-route transmission signals carrying high priority traffic to the second switching matrix while transmission signals carrying low priority traffic may be dropped.

According to another aspect of the invention, the object is achieved by a method of switching transmission signals or fractions thereof in a digital transmission network, with the following steps:
- receiving a first transmission signal carrying high priority traffic and a second transmission signal carrying low priority traffic;
- routing the first transmission signal to a first switching matrix;
- routing the second transmission signal to a second switching matrix;
- in the case of a failure of the first switching matrix, re-routing the first transmission signal to the second switching matrix.

According to another aspect of the invention, the object is achieved by a method and network element according to claims 10 and 11, respectively.

The invention has the advantage that the over-all switching capacity of the network element is used more efficiently, that the first and second switching matrices can be designed with lower capacity than in prior art systems and that implementation of the invention into existing systems could be accomplished with only a software update of the control system.

The invention can be used to advantage in IP (Internet Protocol) and data networks because it is important in these networks to support all kind of Service Layer Agreements (SLA). This means that it is necessary to support high priority traffic as well as low priority traffic.

In the case of a failure of the first switching matrix, low priority traffic may be discarded. The first and second transmission signals may to advantage form part of either a linear 1:1 MSP, a linear 1:n MSP, or an MS-SPRing.

Other advantageous developments of the invention appear in the dependent claims.

### Brief Description of the Drawings

Preferred embodiments of the present invention will now be described with reference to the accompanying drawings in which
Figure 1 shows a schematic block diagram of a network element according to the invention;
figure 2 shows the network element of figure 1 under a first failure condition;
figure 3: shows the network element of figure 1 under a second failure condition;
figure 4: shows the network element of figure 1 under a third failure condition with double failure;
figure 5: shows the network element of figure 1 under a fourth failure condition with double failure, too; and
figure 6 a development of the invention which internally protects high priority traffic, only.

### Detailed Description of the Invention

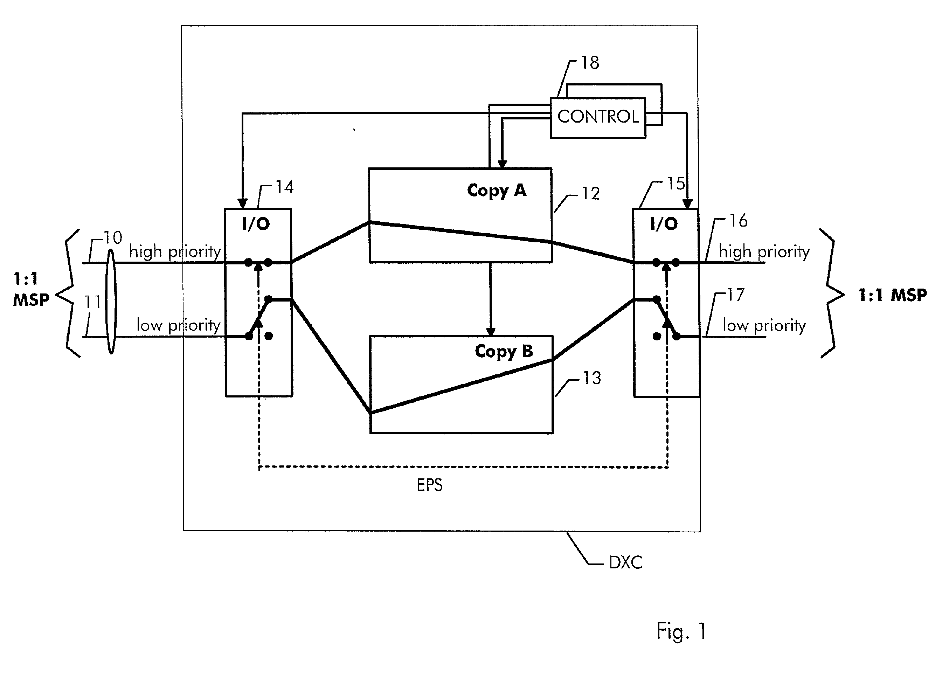

A digital cross-connect DXC according to a preferred embodiment of the present invention as shown in figure 1 comprises input ports 14, output ports 15, a first switching matrix 12, a second switching matrix 13 and a control system 18. Input ports 14 and output ports 15 are respectively connected to both switching matrices 12, 13. The first switching matrix 12 is denoted as matrix copy A and acts as an active matrix while the second switching matrix 14, denoted as matrix copy B, acts as a protection matrix. In the case of a failure, matrix copy B takes over operation of matrix copy A as will be described below. Control system 18 configures and controls the operation of input ports 14, output ports 15 and switching matrices 12 and 13. As shown schematically, control system 18 is also provided twice as a working system and a protection system. Input ports 14 and output ports 15 are shown as separate devices only for sake of clarity. In practice, these are arranged on several aggregate I/O boards, each carrying one or more input and output ports. One input port together with its corresponding output port is typically called I/O port.

For the sake of simplicity, only one direction will be described in the following, while in practice, cross-connections between Input and Output ports are bidirectional. The external lines 10, 11 and 16, 17 are in practice as well bidirectional but will be described in one direction, only. The implementation of a bidirectional cross connection through a matrix copy can be realized by two unidirectional paths.

In the context of digital transmission networks, switching of transmission signals or fractions thereof is also often referred to as "cross-connecting". Such fractions of transmission signals are multiplex units which are multiplexed into the transmission signal according to a multiplex hierarchy. In the example of SDH (Synchronous Digital Hierarchy), specified in ITU-T G.707, these multiplex units are referred to as Virtual Containers. In the Optical Transport Hierarchy (OTH) as specified in ITU-T G.709, these multiplex units are referred to as Optical Channels (OCh)

In traditional cross-connect systems, matrix copy A and copy B perform essentially the same functions. Each received transmission signal is duplicated in the input port and broadcasted to both matrix copies. Each matrix copy switches its copy of the signal to the same output port which selects the better of the two signal copies. In the case of an established line protection like 1+1 MSP, the same transmission signal is received twice over two separate lines at two input ports. The better of the two transmission signals of the line protection is selected at the input port, broadcasted to both switching matrices and switched in duplicate to the corresponding output port. The same applies for the return signal of the bidirectional connection.

When extra traffic is supported (this situation is called 1:1 MSP), the protection line of the line protection carries instead of a transmission signal identical to the one carried by the working line a transmission signal carrying low priority traffic. In this case, the line protection carries over its two redundant lines a protected traffic signal and an extra traffic signal. Since the two different signals are received in at two input ports, each is broadcasted to both switching matrices and switched in duplicate to respective output ports. Thus, in total four signals are switched through the two matrix copies. In the case of a line failure, the extra traffic signal is discarded and the protected traffic signal is re-routed over the protection line, thus replacing the previous extra traffic signal. During failure free operation, matrix copies A and B thus switch in total two identical copies of the same signal, i.e., two copies of the protected traffic signal and two copies of the extra traffic signal.

A basic idea of the present invention is now, to use matrix copy B to switch extra traffic and to use matrix copy A to switch protected traffic, only. This takes into account that components inside the cross-connect are very reliable compared to the optical lines in the network. The typical downtime of a matrix component is hundreds of even thousands of times lower than the typical downtime of an optical span. Additionally the mean time to repair (MTTR) of failed components in network elements which are typically located in central offices is much shorter than for outdoor fiber cuts. The invention takes advantage of this fact and recognizes that a loss of extra traffic, if acceptable in the case of a line failure, would even be acceptable in the case of a failure of one of the matrix copies. According to the invention, transmission signals of the two redundant lines of a line protection are thus distributed over the two already existing copies of the matrix, thereby increasing either the total switching capacity of the cross-connect by a factor of up to two or allowing to use in the cross-connect switching matrices of only half the switching capacity as compared to the traditional architecture. The effect of this to the number of required switching components is dramatic since for a square matrix, half the switching capacity means a reduction in connection points to the square root of the original number of connection points and for a Clos type matrix still a reduction to the half of the original number of connection points.

As a conclusion, it could be said that the invention accomplishes and takes advantage of a synergetic effect between the standardized line protection mechanisms and the proprietary equipment protection.

This is shown by way of example in figure 1. Input ports 14 terminate two optical lines 10, 11 which are both part of a first 1:1 multiplex section protection (1:1 MSP). Output ports 15 generate two optical lines 16, 17, which are part of a second 1:1 MSP. Working lines 10 and 16 carry transmission signals with high priority traffic called the protected traffic while protection lines 11 and 17 carry transmission signals with extra traffic of low priority. In the case of an external line failure, the protected traffic is re-routed to the protection lines 11, 17 according to the principle of MSP.

Internally to the cross-connect DXC, the protected traffic signal is routed by the receiving input port to matrix copy A 12 and the extra traffic signal is routed to matrix copy B 13. Matrix copy A 12 switches the protected traffic signal to the output port connected to working line 16 and matrix copy B 13 switches the extra traffic signal to the output port connected to protection line 17. The information as to which if the received signals carries high priority traffic and which carries low priority traffic is per se known in the I/O section from the MSP protocol in K1 and K2 bytes of the overhead of the received signals.

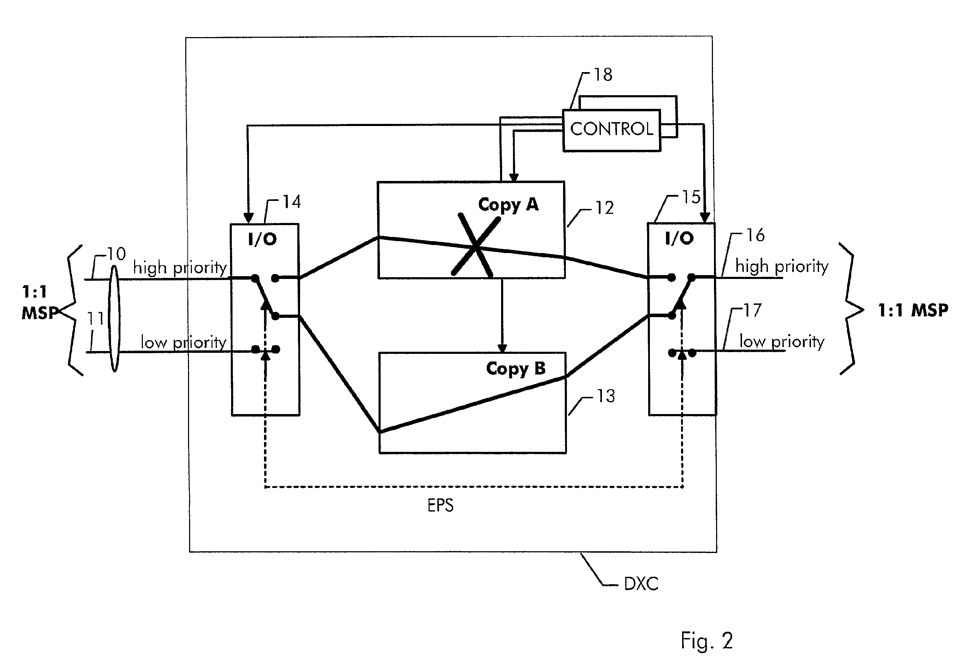

The broken line in figure 1 indicates the equipment protection switching function EPS, which is responsible for switching from working to protection resources in the case of a failure. This is initiated if necessary under the control of control system 18 and will be explained in more detail with reference to figures 2 to 5 which show several failures that could occur in the external network and in the cross-connect internally.

A first failure as shown in figure 2 affects matrix copy A 12. In the case of such hardware failure, the switched protected traffic signal arriving at output port 15 is disturbed. The output port receiving the corrupt signal detects the failure with regular check sum tests, identifiers or internal signaling and notifies the failure to control system 18. In order to restore the protected traffic, control system 18 immediately initiates the equipment protection switching function EPS by controlling the affected input port 14 to re-route the protected traffic signal received via line 10 to matrix copy B and by controlling the affected output port 15 to receive the protected traffic signal from matrix copy B. Re-routing can be effected with a simple hardware switch as shown in the figure or by any other means.

As a result of the switch-over, the protected traffic signal is restored over matrix copy B while the extra traffic signal is discarded at the input port.

Instead of discarding the extra traffic signal, one could also think of building up a new path for this signal through matrix copy B if the latter has free resources. Nevertheless, this should be done only after successful switch-over of the protected traffic signal in order to ensure the target restoration time of 50ms as defined for 1+1 MSP.

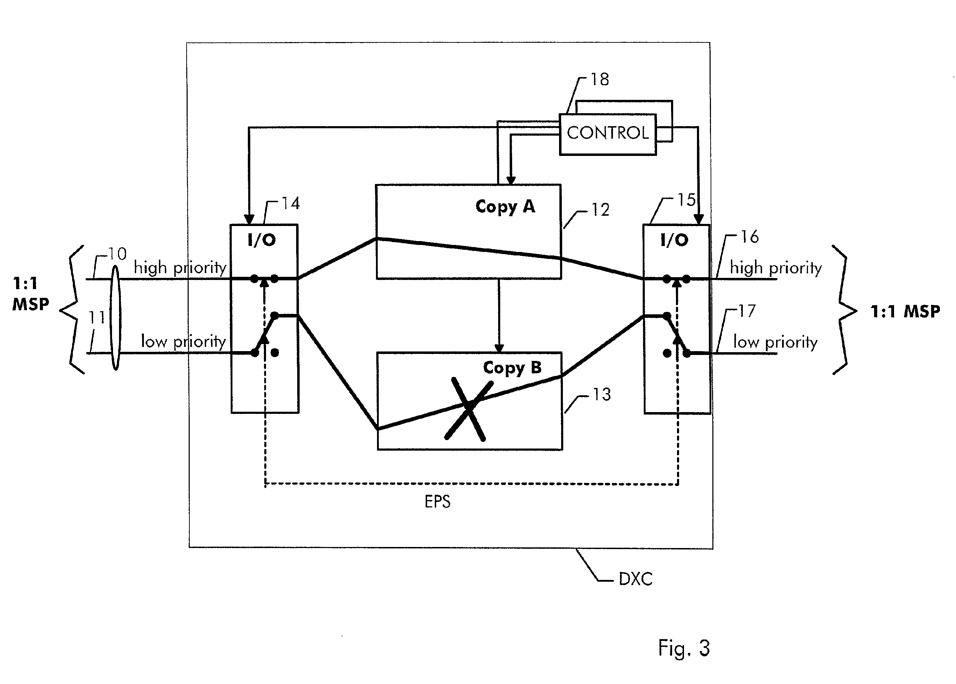

A failure in matrix copy B 13 is shown in figure 3. The failure of the extra traffic signal is detected and notified to control system 18 by the output port 15 connected to protection line 17. Since copy B in normal operation only switches extra traffic, the protected traffic is not affected by this failure. Thus, no switch-over is necessary.

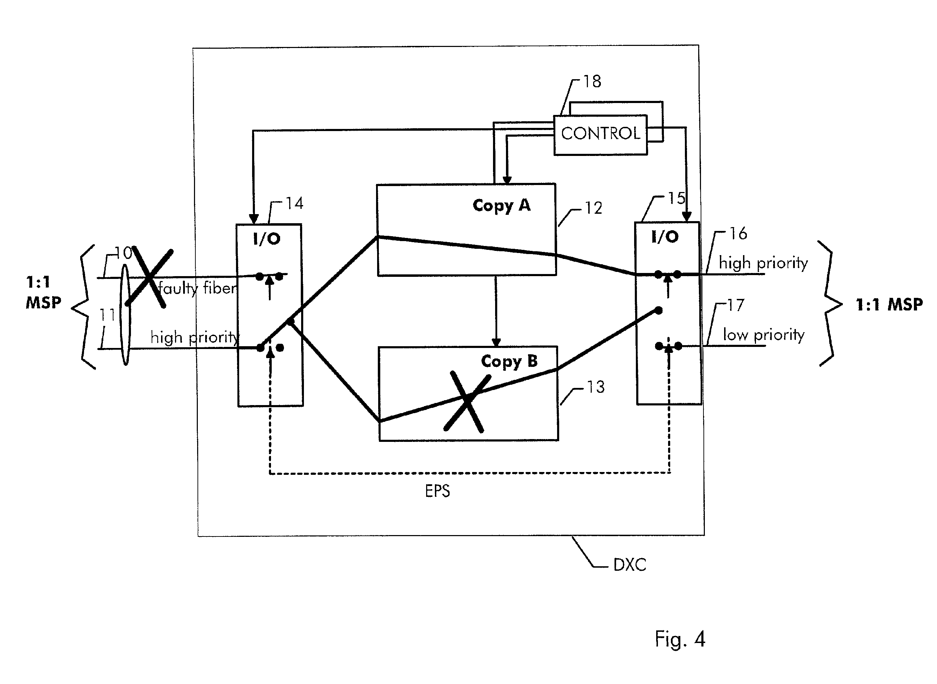

In figure 4, a situation with double failure is shown. Internally to the cross-connect, matrix copy B has a failure and externally, the protected line 10 is disturbed. In a first step, the failure of protected line 10 is detected at the corresponding input port 14. In accordance with MSP protocol, this failure is communicated to the sending node using MSP protocol over K1, K2 bytes in the section overhead being transmitted in the reverse direction of protection line 11. This occurs under control of control system 18. MSP protocol includes that cross-connect sends back to the sending node at the far end of faulty fiber 10 a bridge request in the reverse direction to protection line 11. Responsive to receiving the bridge request, the far end node switches transmission of the protected traffic signal from the faulty line 10 to the protection line 11 and discards the extra traffic previously carried over the protection line. The corresponding input port 14 thus receives the protected traffic signal from line 11.

The failure of matrix copy B 13 is detected at the output port 17 connected to protection line 17. This failure is notified to control system 18. Since a switch over of the protected traffic signal from the working line to the protection line has occurred, and since the failure in copy B thus affects the protected traffic, control system 18 initiates the equipment protection function EPS to cause the input port 14 connected to line 11 to re-route the received traffic signal to matrix copy A. Thus, the protected traffic signal is switched from protection line 11 over matrix copy A 12 to working line 16. This way, protected traffic is restored even in the case of a double failure.

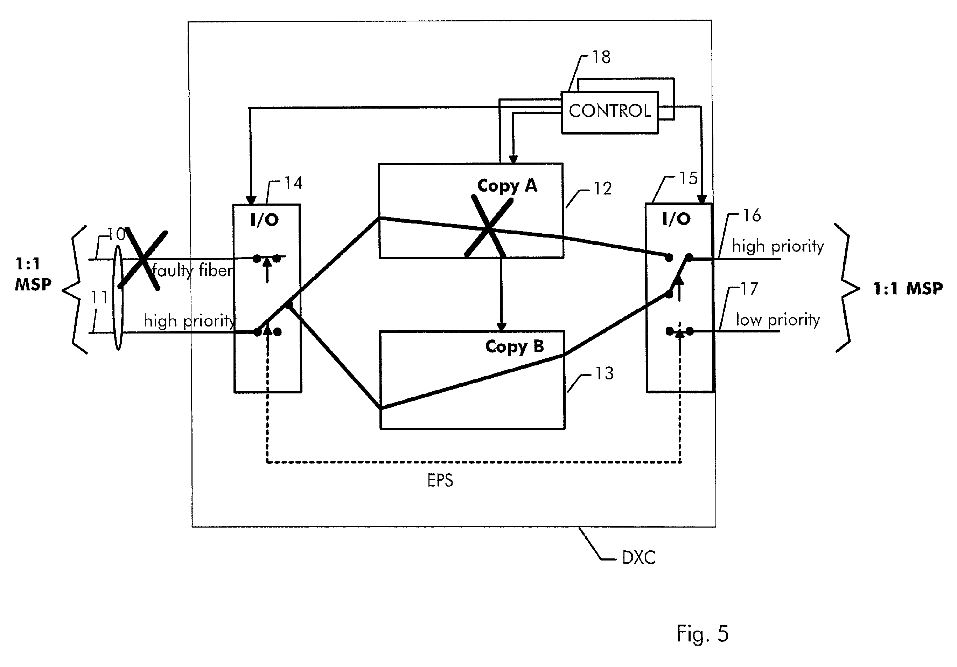

Figure 5 shows the same double failure situation but with a failure of matrix copy A instead of matrix copy B. In this case, the output port 15 connected to working line 16 detects a loss of signal and notifies the control system 18, which initiates equipment protection switching function by causing the output port to receive the protected traffic signal from matrix copy B 13. As in figure 4, protected traffic is thus restored.

It is to be noted that in any of the above examples no reconfiguration of the switching matrices 12,13 is necessary since the switch-over takes place in the I/O section and uses the already existing path through the non-failed switching matrix. However, a reconfiguration of the non-failed switching matrix may be necessary, if for example the extra traffic is in the failure-free case switched to a board or shelf different than the protected traffic. Matrix reconfiguration could be accomplished by providing the redundant switching matrix with two lookup tables for its configuration, one table for the failure-free case and one for the case of a failure of matrix copy A. This allows a fast switch-over between the two configurations.

Nevertheless, for other kind of protection switching like SNCP (Sub-Network Connection Protection) on path level, it would also be possible to reconfigure the non-failed switching matrix in a conventional way to restore the protected traffic. In the case of path protection, time constraints are less stringent and would thus in principle allow reconfiguration of the switching matrix.

As mentioned above, it would be possible instead of discarding the extra traffic to build up a new path through the failure-free matrix copy to connect again the I/O ports of the protection line, if the matrix has free capacity left.

In the example of an SDH network element, the input signal received by the I/O section may also be a multiplexed signal containing fractions carrying high priority traffic and fractions carrying low priority traffic. An example for such a multiplex signal would be an STM-16 signal containing 16 individual VC-4. In this case, the receiving interface may break down the multiplex signal to its constituent STM-1 equivalents, i.e., the VC-4s with some kind of internal frame structure equivalent to STM-1 frames and forward the 16 STM-1 equivalents over 16 parallel connections independently to the two switching matrices. According to the invention, STM-1 equivalents carrying high priority traffic will be routed under the control of the control system to the first switching matrix while STM-1 equivalents carrying low priority traffic will be routed to the second switching matrix and in the case of a failure of the first switching matrix, STM-1 equivalents carrying high priority traffic will be re-routed to the second switching matrix while STM-1 equivalents carrying low priority traffic may be discarded.

In a similar way, wavelength multiplexed OTN signals may also be broken down to their constituents and distributed over the two matrices independently, depending on the priority of the traffic carried therein.

In a similar way an Ethernet signal (10M, 100M, GE, 10GE) that is mapped into multiple virtual concatenated VC-nv signals, e.g. 8x VC-4v transporting one GE with 4x VC-4v with high priority and 4x VC-4v with low priority, may also be broken down to their constituents and distributed over the two matrices independently, depending on the priority of the traffic carried therein. Similar mappings are possible for IP or ATM payloads.

Compared to conventional cross-connects, implementation of the invention requires first of all changes to the control system that controls equipment protection switching. Furthermore, conventional cross-connect systems may have implemented a hard broadcast function between each I/O port and the two switching matrices, which function duplicates each signal and distributes these to both copies of the matrix. According to the invention, it is required that each I/O port is controllably connectable to either of the two matrix copies. This can be achieved through hard switches like change-over switches arranged on each I/O board or through one or more dedicated protection switching boards arranged between the I/O section and the matrix boards, through a pre-stage of the switching matrices, or through any other kind of switch facility.

The control system is a software-driven processing device of conventional design and the control software running on the processing device contains control commands to control operation of I/O section and switching matrices. According to the invention, the control software initiates in the case of a failure the switch-over from working to protection line and from matrix copy A to matrix copy B, depending on the nature of the failure.

Preferably, the control system according to the invention is composed of several modular sub-systems. This is especially advantageous, if the several components of the cross-connect are arranged in separate shelves. A first sub-system is assigned to the I/O section consisting of a plurality of I/O boards arranged in a first shelf. The first sub-system controls all the I/O boards and is responsible for equipment protection switching according to the present invention. A second subsystem is assigned to the switching matrices which are composed of a plurality of matrix boards arranged in a second shelf. The second sub-system controls and configures the switching matrices to properly interconnect the various I/O ports. A third superordinate sub-system controls operation of the first and second sub-systems and is responsible for superordinate functions such as operation and maintenance issues. Implementation of the invention would then mainly affect the first sub-system but in the case of reconfiguration of the switching matrices also the second and third sub-systems.

The cross-connect of the above examples is an SDH cross-connect (Synchronous Digital Hierarchy). Its matrix copies A and B may be matrices of any type like Clos-type switching matrix or square matrix but are typically of the same design. However, the invention is not limited to SDH and can be implemented according to the same principles in other kind of transmission networks like for examples SONET (Synchronous Optical Network) or OTN (Optical Transport Network) as specified in ITU-T G.709, with not only electrical but also optical switching matrices.

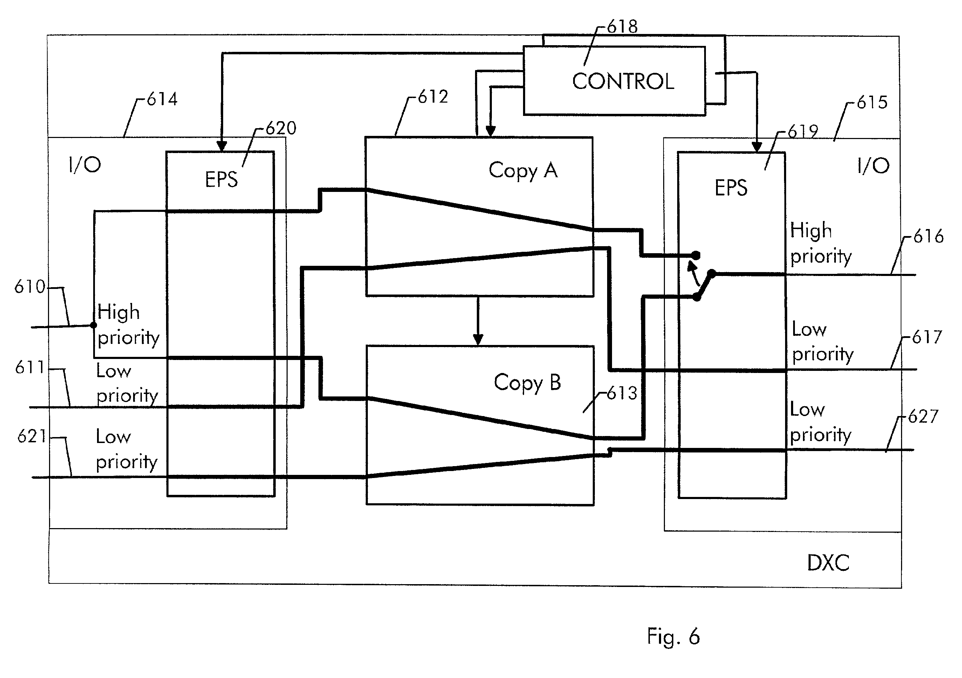

In a further development of the invention, it would also be possible, to broadcast received signals or their constituents to both switching matrices if they carry high priority traffic but to route received signals or their constituents carrying low priority traffic to only one of the two switching matrices. This means that high priority traffic is internally protected by switching it over both two matrix copies and selecting the better of the two signal copies at the output port while low priority traffic is not protected internally. An example of this is shown in figure 6.

In figure 6, the crossconnect DXC receives at an input I/O card 614 one signal 610 carrying high priority traffic and two signals 611, 621 carrying low priority traffic. All three received signals are externally unprotected, i.e., no MSP or MS-SPRING is applied to any of them.

The equipment protection switching function 620, 619 (EPS) is in this embodiment included into the I/O section 614, 615. Each I/O port is connectable to either of the two switching matrices 612, 613 under the control of control system 618. The matrices switch the signals to output port section 615.

Since the received signal 610 carries high priority traffic, internal protection has to be applied to it. The signal is thus duplicated in the I/O port 614 and distributed to both copies of the switching matrix. Both copies 612, 613 switch a copy of the same signal to the same output port 615, which selects the better of the two signal copies and transmits these as output signal 616 to the external network. Selection is carried out by the EPS function 619.

The two other received signals 611 and 621 carry low priority traffic, only. Thus, no internal protection is necessary for these. Each low priority signal is thus forwarded to only one of the matrix copies 612, 613. Signal 61 1 is switched by switching matrix 612 to the corresponding output port 615 and signal 621 by switching matrix 613. The corresponding output ports 615 transmit the switched signals as output signals 617 and 627, respectively.

Due to the fact that the redundant matrix copy 613 protects only high priority traffic against internal failures, the switching capacity for low priority traffic is increased. The configuration of the two matrix copies regarding low priority traffic is unsymmetrical.

This protection mechanism takes into account that data traffic like conventional IP traffic is often transmitted at the so called best-effort approach while other traffic carrying for example digitized speech signals normally require better quality of service. Network operators or customers may choose on whether they want to ensure quality of service by protecting the transmission signals or not. Transmission of protected traffic may then be charged at a higher rate than unprotected transmission of low priority traffic since it uses less resources of the network elements.

While in the first embodiment using external section protection, the information of whether the carried traffic has high or low priority is known in the I/O section due to the protection protocol in K1 and K2 bytes of the overhead of the received signals, this information is no longer available per se for the latter embodiment. Thus, an additional signaling using either reserved overhead bits or the network management system is required to inform the I/O section of the traffic priority. In our example, control system 618 controls the I/O section to handle received signals as either high or low priority signals and apply the appropriate protection. Control system 618 is informed of the priority class of each received signal by the central network management system. However, this distinction can also be decided in the I/O section itself, if the priority information is contained in any overhead byte reserved for internal or proprietary use, which may alternatively be implemented in the network.

Since the priority type of the received signals in the latter embodiment is not known per se, it is however important that the crossconnect system has means, as for example the control system or a protocol daemon running directly in the I/O section, to distinguish between received signals carrying high or low priority traffic. The basic concept of this latter embodiment is to apply local protection depending on the priority class of the traffic carried by any received signal and to configure the switching matrices asymmetrically for signals carrying low priority traffic. In case that several levels of priority exists, the invention orders and treats the signals according the relative priorities.

## Claims

1. A network element (DXC) for a digital transmission network, comprising
- two or more I/O ports (14, 15) for receiving and transmitting transmission signals (10, 11, 16, 17), each of said transmission signals carrying either high priority traffic (10) or low priority traffic (11) or a combination thereof;
- a first switching matrix (12) for random switching received transmission signals or fractions thereof from any to any I/O port (14, 15);
- a second redundant switching matrix (13), said second matrix being provided to take over operation of the first switching matrix (12) in the case of a failure;
- a control system (18) for controlling the configuration of said I/O ports (14, 15) and of said first and second switching matrices (12, 13);
**characterized in that**
each of said I/O ports (14, 15) being controllably connectable to either of said two switching matrices (12, 13) and **in that** said control system being adapted to control said I/O ports (14, 15)
- to route transmission signals or fractions thereof carrying high priority traffic to said first switching matrix (12),
- to route transmission signals or fractions thereof carrying low priority traffic to said second switching matrix (13), and,
- in the case of a failure of said first switching matrix (12), to re-route transmission signals carrying high priority traffic to said second switching matrix (13).

2. A network element according to claim 1, wherein in the case of a failure said control system (18) controls said I/O ports (14, 15) to discard transmission signals or fractions thereof carrying low priority traffic.

3. A network element according to claim 1, wherein said I/O ports (14, 15) are arranged in a first shelf and said matrices (12, 13) are arranged in a second shelf and wherein said control system (18) comprises
- a first sub-system adapted to control said I/O ports 14, 15),
- a second subsystem adapted to control said switching matrices (12, 13),
- and a third superordinate sub-system controlling said first and second sub-systems.

4. A method of switching transmission signals or fractions thereof in a digital transmission network, said method comprising the steps of:
- receiving a first transmission signal and a second transmission signal, said signals carrying either high priority traffic (10) or low priority traffic (11) or any combination thereof;
- routing said first transmission signal or fractions thereof carrying high priority traffic to a first switching matrix (12);
- routing said second transmission signal carrying low priority traffic to a second switching matrix (13);
- in the case of a failure of said first switching matrix (12), re-routing said first transmission signal or fractions thereof to said second switching matrix (13).

5. A method according to claim 4, comprising the step of discarding said second transmission signal (11) or fractions thereof in the case of a failure of said first switching matrix.

6. A method according to claim 4, wherein said first and second transmission signals form part of a 1:1 multiplex section protection.

7. A method according to claim 4, wherein said first and second transmission signals form part of a 1:n multiplex section protection.

8. A method according to claim 4, wherein said first and second transmission signals form part of a multiplex section shared protection ring.

9. A method according to claim 4, further comprising the steps of duplicating said first transmission signal or fractions thereof carrying high priority traffic and routing the signal copy to the second switching matrix, while routing the second transmission signal of fractions thereof carrying low priority traffic to the only one of the switching matrices.

10. A method of switching transmission signals or fractions thereof in a digital transmission network, said method comprising the steps of:
- receiving a first transmission signal and a second transmission signal, said signals carrying either high priority traffic (10) or low priority traffic (11) or any combination thereof;
- duplicating said first transmission signal or fractions thereof carrying high priority traffic and routing the two signal copies to a first switching matrix (12) and to a second switching matrix (13);
- routing said second transmission signal carrying low priority traffic to only one of the said switching matrices (12, 13); and
- switching by the switching matrices (12, 13) the signals to predefined output ports(15).

11. A network element (DXC) for a digital transmission network, comprising
- two or more I/O ports (14, 15) for receiving and transmitting transmission signals (10, 11, 16, 17), each of said transmission signals carrying either high priority traffic (10) or low priority traffic (11) or a combination thereof;
- a first switching matrix (12) for random switching received transmission signals or fractions thereof from any to any I/O port (14, 15);
- a second redundant switching matrix (13), said second matrix being provided to take over operation of the first switching matrix (12) in the case of a failure;
- a control system (18) for controlling the configuration of said I/O ports (14, 15) and of said first and second switching matrices (12, 13);
**characterized in that**
each of said I/O ports (14, 15) being controllably connectable to either of said two switching matrices (12, 13), **in that** said network element comprises means (18) to distinguish between received signals carrying high or low priority traffic, and **in that** said control system being adapted to control said I/O ports (14, 15)
- to duplicate transmission signals or fractions thereof carrying high priority traffic and to route the two signal copies to both of said switching matrices (12, 13) and
- to route transmission signals or fractions thereof carrying low priority traffic to only one of said switching matrices (12,13).
